# EUROPEAN PATENT APPLICATION

(11) **EP 4 599 996 A1**
(43) Date of publication of application: **13.08.2025**
(21) Application number: 23874476.7
(22) Date of filing: 15.06.2023
(51) Int. Cl.: B25J 13/00, B65G 1/00, B65G 1/137, B65G 47/91, B25J 15/06

(54) **TRANSFER SYSTEM AND TRANSFER EQUIPMENT**

(30) Priority: 07.10.2022 JP 2022162560
(71) Applicant: Daifuku Co., Ltd., Osaka-shi, Osaka 555-0012 (JP)
(72) Inventor: UEDA, Yuichi, Gamo-gun, Shiga 529-1692 (JP); TSUKAMOTO, Kunihiro, Gamo-gun, Shiga 529-1692 (JP); MATSUMOTO, Kosuke, Gamo-gun, Shiga 529-1692 (JP)
(74) Representative: Meissner Bolte Partnerschaft mbB
(86) International application number: PCT/JP2023/022206
(87) International publication number: WO 2024/075341

(57) **Abstract**

This invention saves a space for a transfer system, while enhancing safety of the transfer system. The transfer system (1) includes: a transporting part (11) which transports an article (2) in an X direction; a transferring part (12) which is provided on a front end side of the transporting part (11) and which holds and transfers the article (2); a camera part (13) which is disposed above the transferring part (12) and which captures an image of the article (2); and two support parts (14) and (14) which support the camera part (13), which are provided in a Y direction, and which separate the transferring part (12) and an outside area in the Y direction from each other.

## Description

### Technical Field

The present invention relates to a transfer system and a transfer facility, each of which is for an article in physical distribution.

### Background Art

Conventionally, in distribution warehouses etc., a transfer system including a picking device (transfer device), such as a robot arm, is used so as to efficiently sort a various kinds of many articles into shipment containers according to shipment destinations. In relation to this type of transfer system, Patent Literature 1 discloses a configuration capable of executing (i) automatic transferring according to which an article is transferred by the picking device and (ii) manual transferring according to which an article is transferred by a worker.

### Citation List

### [Patent Literature]

### [Patent Literature 1]

Japanese Patent Application Publication, Tokukai, No. 2020-070143

### Summary of Invention

### Technical Problem

From the viewpoint of safety, it is desirable to provide, around the picking device which carries out the automatic transferring work, a guard for preventing a person from coming into contact with the picking device. This, however, will lead to enlargement of an area necessary for the transfer system. As a result, the number of transfer systems which can be installed in a given area in a physical distribution center or the like may decrease.

An aspect of the present invention has an object to save a space for a transfer system while enhancing safety of the transfer system.

### Solution to Problem

In order to attain the above object, a transfer system in accordance with an aspect of the present invention includes: a transporting part which transports an article in a first direction; a transferring part which is provided on one end side of the transporting part and which holds and transfers the article; a camera part which is disposed above the transferring part and which captures an image of the article; and two support parts which support the camera part, the two support parts being provided, for the transferring part, at respective locations in a second direction orthogonal to the first direction in a plan view, and the two support parts separating the transferring part and an outside area in the second direction from each other.

A transfer facility in accordance with another aspect of the present invention is a transfer facility including: a plurality of transfer systems each of which is identical to the transfer system configured as above, the plurality of transfer systems being arranged side by side along a second direction which is orthogonal to the first direction in a plan view so that the transporting parts of the plurality of transfer systems are substantially in parallel with each other.

### Advantageous Effects of Invention

In accordance with an aspect of the present invention, it is possible to save a space for a transfer system while enhancing safety of the transfer system.

### Brief Description of Drawings

Fig. 1 is a perspective view illustrating an overview of a transfer system in accordance with an embodiment of the present invention.
Fig. 2 is a plan view illustrating an overview of the transfer system.
Fig. 3 shows a front view, two side views, and a plan view of six-sided views illustrating an overview of a guard of the transfer system.
Fig. 4 shows a front view, a side view, and a plan view of six-sided views illustrating an overview of a variation of a camera part and a support part in the transfer system.
Fig. 5 is a plan view illustrating an overview of a transfer facility in accordance with another embodiment of the present invention.

### Description of Embodiments

The following description will discuss embodiments of the present invention in details. Note that, for convenience of description, members having functions identical to those of respective members described in embodiments are given respective identical reference signs, and a description of those members is omitted as appropriate.

### First Embodiment

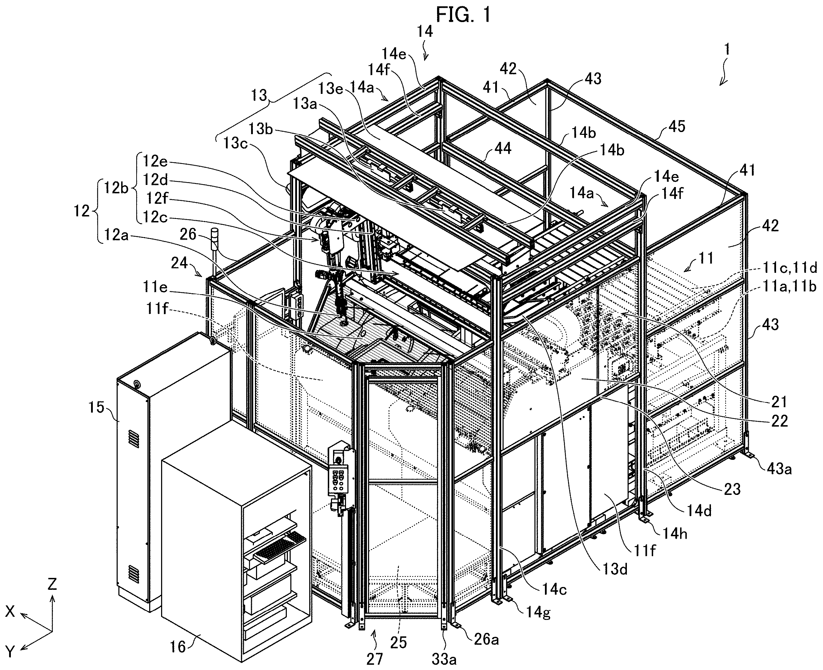

The following description will discuss, with reference to Figs. 1 to 3, an embodiment of the present invention.

### (Overview of Transfer System)

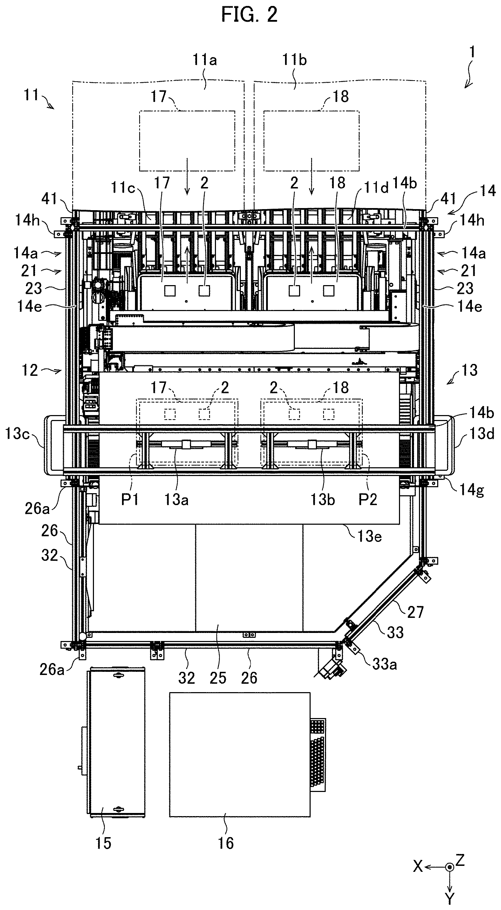

Fig. 1 is a perspective view illustrating an overview of a transfer system 1 in accordance with the present embodiment. Fig. 2 is a plan view illustrating an overview of the transfer system 1. The transfer system 1 carries out transferring of an article 2 in a distribution warehouse or the like. As shown in Figs. 1 and 2, the transfer system 1 in accordance with the present embodiment includes a transporting part 11, a transferring part 12, a camera part 13, a support frame 14, a control part 15, and a terminal part 16.

### (Transporting Part)

The transporting part 11 transports, in a Y direction (a front-rear direction, a first direction), a first container 17 and a second container 18 each configured to house an article 2 therein. To be more specific, the transporting part 11 includes (i) carry-in conveyors 11a and 11b disposed on a lower side in a Z direction and (ii) carry-out conveyors 11c and 11d disposed on an upper side in the Z direction. By the carry-in conveyors 11a and 11b, the first container 17 and the second container 18 are transported toward a front side in the Y direction. By the carry-out conveyors 11c and 11d, the first container 17 and the second container 18 are transported toward a rear side in the Y direction.

Further, the transporting part 11 includes a moving mechanism 11e and a housing 11f. The moving mechanism 11e causes the first container 17 coming from the carry-in conveyor 11a to be moved to a first transfer position P1 one by one in order, and causes the second container 18 coming from the carry-in conveyor 11b to be moved to a second transfer position P2 one by one in order. Further, the moving mechanism 11e causes the first container 17 positioned at the first transfer position P1 to be moved to the carry-out conveyor 11c one by one in order, and causes the second container 18 positioned at the second transfer position P2 to be moved to the carry-out conveyor 11c one by one in order. The housing 11f houses the moving mechanism 11e therein.

### (Transferring Part)

The transferring part 12 is disposed on a front end (one end) side of the transporting part 11 in the Y direction. The transferring part 12 holds an article 2 housed in the first container 17 positioned at the first transfer position P1, and transfers the article 2 to the second container 18 positioned at the second transfer position P2. The transferring part 12 is provided by a stand and/or the like (not illustrated) at a location which is upward of the moving mechanism 11e and the housing 11f of the transporting part 11 in the Z direction.

The transferring part 12 includes a picking head 12a which holds the article 2 and a driving part 12b which raises and lowers the picking head 12a in the Z direction and causes the picking head 12a to move in two directions, specifically, a X direction and the Y direction in a plan view. The picking head 12a is constituted by, for example, one or more suction pads configured to suck the article 2. The picking head 12a sucks the article 2 housed in the first container 17 from above, and holds the article 2 by hanging the article 2.

The driving part 12b includes a fixed rail 12c, a first movable rail 12d, a second movable rail 12e, and a support arm 12f. The fixed rail 12c is disposed along the X direction. The first movable rail 12d is disposed along the Z direction, and moves in a reciprocating manner along the fixed rail 12c in the X direction. The second movable rail 12e is disposed along the Y direction, and moves in a reciprocating manner along the first movable rail 12d in the Z direction.

The support arm 12f is disposed along the Z direction, and moves in a reciprocating manner along the second movable rail 12e in the Y direction. Further, the support arm 12f has, on its lower side in the Z direction, the picking head 12a attached thereto. Thus, by controlling operation of the driving part 12b, the transferring part 12 can cause the picking head 12a to move in a reciprocating manner in three directions, specifically, the X, Y, and Z directions.

The transferring part 12 has a structure that is simpler than that of a transferring unit such as, for example, a six-axis robot, and is easily applicable to a multi-line conveyor layout. Therefore, if the transferring part 12 is employed, it is possible to improve a degree of freedom in layout design of the transfer system 1.

### (Camera Part)

The camera part 13 is disposed above the transferring part 12, and captures an image of the article 2. The camera part 13 includes a first camera 13a and a second camera 13b. By capturing an image of the first container 17 positioned at the first transfer position P1, the first camera 13a captures an image of one or more articles 2 housed in the first container 17. By capturing an image of the second container 18 positioned at the second transfer position P2, the second camera 13b captures an image of one or more articles 2 housed in the second container 18. Note that the camera part 13 may include lights 13c and 13d and a reflective plate 13e.

### (Support Frame)

A support frame 14 is a frame body which supports the camera part 13. The support frame 14 includes (i) support parts 14a and 14a that are disposed so as to be adjacent to the transferring part 12 in the X direction (a lateral direction, a second direction) perpendicular to the Y direction in a plan view and (ii) beam members 14b and 14b that are bridged between the support parts 14a and 14a. The first camera 13a and the second camera 13b are disposed at respective appropriate positions on the beam member 14b that is located on the front side in the Y direction. Note that the number of beam members 14b may be one or three or more.

Each of the support parts 14a and 14a includes two column members 14c and 14d, a girder member 14e, and a reinforcement member 14f. The column members 14c and 14d are arranged in the Y direction, and fixed, by respective fixing members 14g and 14h, to a place in which the transfer system 1 is installed. The girder member 14e and the reinforcement member 14f are bridged between the column members 14c and 14d.

Note that the beam members 14b and 14b may be disposed on the girder member 14e or may be disposed to the column members 14c and 14d, respectively. The support parts 14a and 14a may each include two or more reinforcement members 14f, or the reinforcement member 14f may be omitted. In a case where each of the support parts 14a and 14a is disposed upright with four or more column members, the beam members 14b and 14b may be omitted. In this case, the first camera 13a and the second camera 13b may be disposed at respective appropriate positions on the support parts 14a and 14a.

In the example shown in Figs. 1 and 2, the beam member 14b provided with the first camera 13a and the second camera 13b has a reflective plate 13e extending toward two opposite sides in the Y direction. Further, the lights 13c and 13d are disposed at respective appropriate positions on the reinforcement members 14f and 14f of the support parts 14a and 14a. With this, the reflective plate 13e can reflect light from the lights 13c and 13d so that the first container 17 and the second container 18 can be irradiated therewith.

### (Control Part)

The control part 15 controls each part in the transfer system 1. The terminal part 16 is used by a worker to operate the transfer system 1.

In the transfer system 1 configured as described above, the control part 15 first instructs the carry-in conveyors 11a and 11b of the transporting part 11 to carry in the first container 17 and the second container 18, respectively, from the rear side in the Y direction toward the front end in the Y direction and to continue such transporting. The control part 15 also instructs the carry-out conveyors 11c and 11d of the transporting part 11 to carry out the first container 17 and the second container 18 from a front end portion in the Y direction toward the rear side in the Y direction and to continue such transporting.

Next, the control part 15 instructs the moving mechanism 11e of the transporting part 11 to move the first container 17 and the second container 18, which have been carried in, to the first transfer position P1 and the second transfer position P2, respectively. The control part 15 then instructs, on the basis of images of the first container 17 and the second container 18 which images have been captured by the camera part 13, the transferring part 12 to hold an article 2 housed in the first container 17 positioned at the first transfer position P1 and to transfer the article 2 into the second container 18 positioned at the second transfer position.

Next, the control part 15 instructs the moving mechanism 11e of the transporting part 11 to move the first container 17 positioned at the first transfer position P1 to the carry-out conveyor 11c and moves another first container 17, having been carried in, to the first transfer position P1. Then, the control part 15 instructs the transferring part 12 to carry out the above transferring and repeat this process. The first container 17 that has been moved to the carry-out conveyor 11c is carried out toward the rear side in the Y direction.

Then, when the given article 2 is housed in the second container 18, the control part 15 instructs the moving mechanism 11e of the transporting part 11 to move the first container 17 positioned at the first transfer position P1 to the carry-out conveyor 11c and to move the second container 18 positioned at the second transfer position P2 to the carry-out conveyor 11d. The first container 17 having been moved to the carry-out conveyor 11c and the second container 18 having been moved to the carry-out conveyor 11d are carried out toward the rear side in the Y direction.

### (Guard)

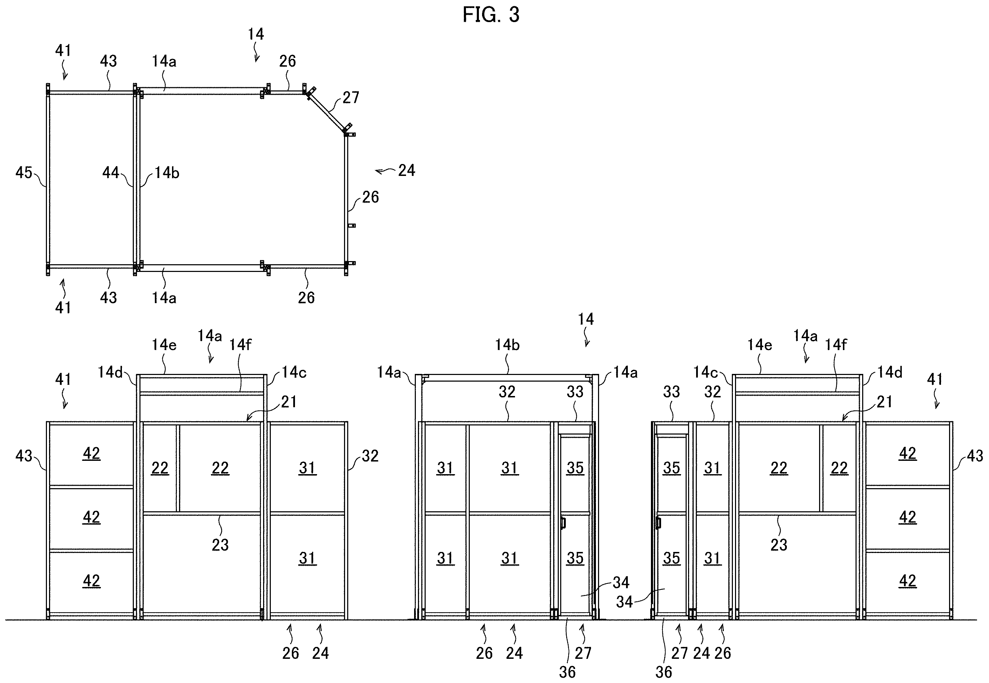

Fig. 3 shows a front view, two side views, and a plan view of six-sided views illustrating an overview the guard of the transfer system 1 in accordance with the present embodiment. In accordance with the present embodiment, it is possible to execute automatic transferring according to which an article 2 is held and transferred by the transferring part 12. Thus, as shown in Figs. 1 to 3, for the view point of safety, the guard for preventing a person or a part of the person from coming into contact with the transferring part 12 is provided around the transferring part 12.

### (Side Guard Part)

As shown in Figs. 1 to 3, the support parts 14a and 14a include the respective side guard parts 21, which separate the transferring part 12 and an outside area in the X direction from each other. Each of the side guard parts 21 includes a transparent plate 22 and a frame member 23 which holds the transparent plate 22. With this, it is possible to prevent a situation in which a person or a part of the person enters the inside from the X direction and comes into contact with the transferring part 12. As a result, it is possible to enhance safety of the transfer system 1.

Furthermore, since the support parts 14a and 14a are provided with the respective side guard parts 21, it is not necessary to additionally provide, to outer sides of the support parts 14a and 14a in the X direction, a guard part for separating the transferring part 12 and the outside area in the X direction from each other. As a result, it is possible to save the space of the transfer system 1.

Incidentally, since the two support parts 14a and 14a are disposed so as to be adjacent to the transferring part 12 in the X direction, the two support parts 14a and 14a are also adjacent to the housing 11f of the transporting part 11, which is located on a lower side of the transferring part 12 in the Z direction. Thus, in the present embodiment, the side guard parts 21 are omitted in lower areas, that is, areas facing the housing 11f, of the support parts 14a. Consequently, it is possible to reduce an area where the side guard parts 21 are provided. Meanwhile, by the housing 11f, it is possible to prevent a situation in which a person or a part of the person enters the inside through the lower area of the support part 14a and coming into contact with the transferring part 12. That is, in the lower areas of the support parts 14a, the housing 11f serves as a partition between the transferring part 12 and the outside area in the X direction.

### (Front Guard Part)

As shown in Figs. 1 to 3, the transfer system 1 is provided with a front guard part 24 (terminal-end-side partition part) which separates (i) an outside area which is opposite to the transporting part 11 across the transferring part 12 in a plan view, i.e., an outside area which is on a front side of the transferring part 12 in the Y direction and (ii) the transferring part 12 from each other. The front guard part 24 is connected to the two support parts 14a and 14a.

Incidentally, with the transfer system 1 in accordance with the present embodiment, it is possible to execute both (i) the automatic transferring according to which an article 2 is held and transferred by the transferring part 12 and (ii) the manual transferring according to which an article 2 is held and transferred by a worker. Thus, at a location between the transferring part 12 and the front guard part 24, there provided a work area 25 for carrying out the manual transferring. That is, the front guard part 24 is provided around the work area 25 so as to be adjacent to the work area 25.

Specifically, the front guard part 24 includes a plurality of fixed-type guard parts 26 and a movable-type guard part 27 which are coupled to each other. Each of the fixed-type guard parts 26 includes a transparent plate 31 and a frame member 32 which holds the transparent plate 31. Further, corners of the frame member 32 which corners are on the lower side in the Z direction are fixed, by respective fixing members 26a, to the place where the transfer system 1 is installed.

The movable-type guard part 27 includes a frame member 33 for fixing and a movable member 34 provided in the frame member 33 for fixing. Corners of the frame member 33 for fixing which corners are on the lower side in the Z direction are fixed, by respective fixing members 33a, to the place where the transfer system 1 is installed. The movable member 34 includes a transparent plate 35 and a frame member 36 which holds the transparent plate 35. The fixed-type guard parts 26 and 26 located on the rear side in the Y direction are respectively coupled to front sides of the support parts 14a and 14a in the Y direction.

With this, it is possible to prevent a situation in which a person accidentally enters the work area 25 and comes into contact with the transferring part 12. As a result, it is possible to enhance safety of the transfer system 1. Further, in the above configuration, the front guard part 24 is provided so as to be adjacent to the work area 25. Providing the front guard part 24 makes it possible to prevent or reduce enlargement of the installation space for the transfer system 1.

Note that, in a case where the transfer system 1 is capable of executing only the automatic transferring, the work area 25 may be set as a monitoring area where a monitoring person monitors the transferring part 12. Alternatively, the work area 25 may be omitted. In this case, the front guard part 24 may be provided on a front side of the transferring part 12 in the Y direction so as to be adjacent to the transferring part 12.

### (Rear Guard Part)

As shown in Figs. 1 to 3, the transfer system 1 is provided with rear guard parts 41 and 41 (transfer-side partition parts) which are adjacent, in the X direction, to the front side of the transporting part 11 in the Y direction and which separate the front side and an outside area in the X direction from each other. Each of the rear guard parts 41 includes a transparent plate 42 and a frame member 43 which holds the transparent plate 42. Front sides of the rear guard parts 41 and 41 in the Y direction are coupled (connected) to rear sides of the support parts 14a and 14a in the Y direction. Further, corners of the frame member 43 which corners are on the lower side in the Z direction are fixed, by respective fixing members 43a, to the place where the transfer system 1 is installed. Reinforcement members 44 and 45 are provided between the rear guard parts 41 and 41.

With this, it is possible to prevent a situation in which a person or a part of the person enters the inside from the transporting part 11 and comes into contact with the transferring part 12. As a result, it is possible to enhance safety of the transfer system 1. Furthermore, in the above configuration, the rear guard parts 41 are provided so as to be adjacent to the transporting part 11. Providing the rear guard parts 41 makes it is possible to prevent or reduce enlargement of the installation space for the transfer system 1.

Moreover, in the above configuration, the transparent plates 22 of the side guard parts 21, the transparent plates 31 and 35 of the front guard part 24, and the transparent plates 42 of the rear guard parts 41 are provided as guards. With this, a monitoring person of the transfer system 1 can monitor the transporting part 11 and the transferring part 12 from the outside of the transfer system 1. Note that the transparent plates 22, 31, 35, and 42 may be replaced with guards each of which is in shape of a fence, a net, or the like.

### (Variations)

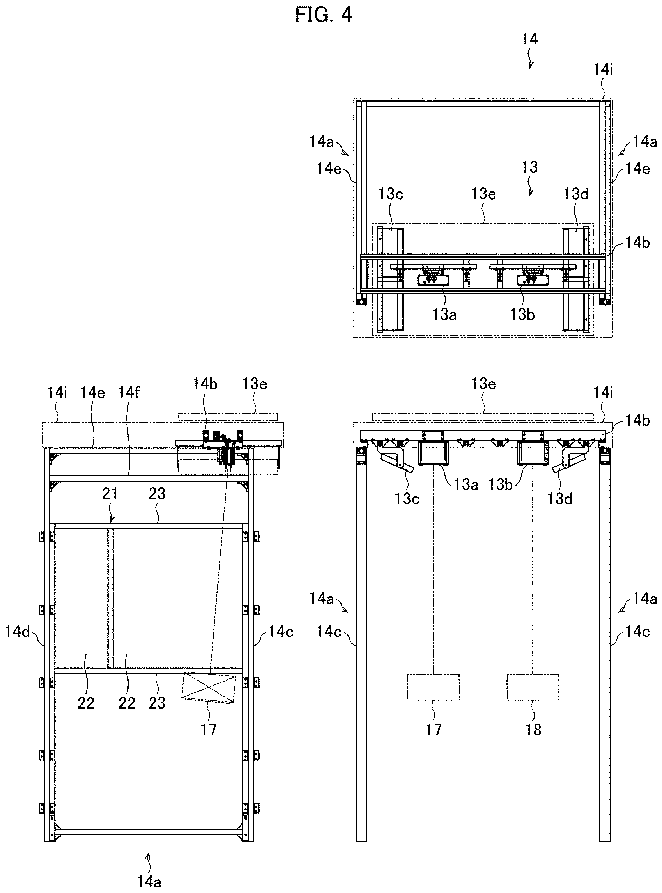

Next, the following description will discuss, with reference to Fig. 4, a variation of the transfer system 1.

Fig. 4 shows a front view, a side view, and a plan view of six-sided views illustrating an overview of a variation of the camera part and the support part in the transfer system 1. The camera part 13 and the support frame 14 illustrated in Fig. 4 differ from the camera part 13 and the support frame 14 illustrated in Figs. 1 to 3 in that the camera part 13 and the support frame 14 illustrated in Fig. 4 are configured such that lights 13c and 13d are provided to a beam member 14b, a support member 14i is additionally provided to an upper end of the support frame 14, and a reflective plate 13e is provided to the support member 14i. In other respects, the camera part 13 and the support frame 14 illustrated in Fig. 4 are the same as the camera part 13 and the support frame 14 illustrated in Figs. 1 to 3. As such, the lights 13c and 13d of the camera part 13 and the reflective plate 13e may be arranged in a various manner. According to the arrangement, the support member 14i may be added to the support frame 14.

### Second Embodiment

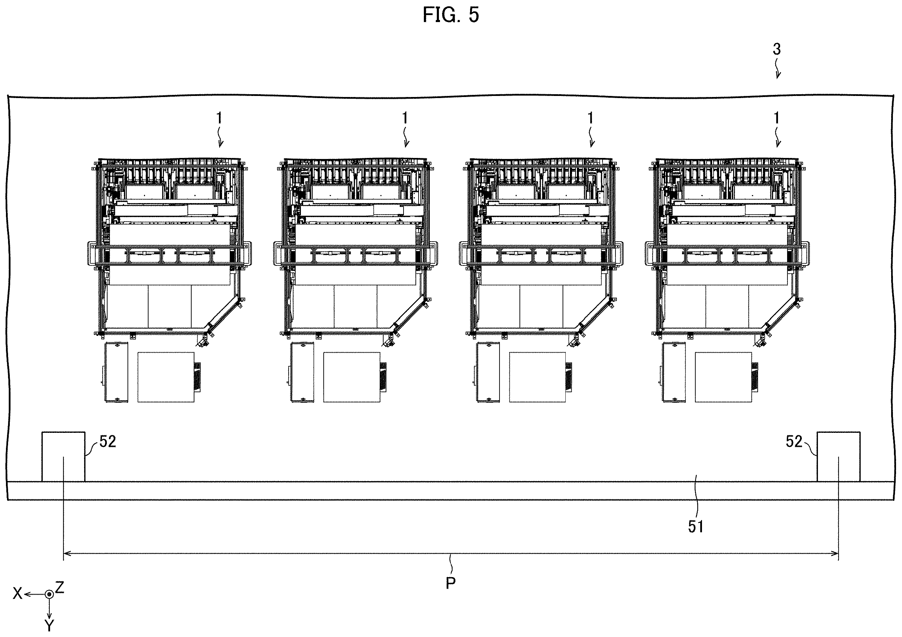

The following description will discuss, with reference to Fig. 5, another embodiment of the present invention.

Fig. 5 is a plan view illustrating an overview of a transfer facility in accordance with the present embodiment. As shown in Fig. 5, a transfer facility 3 includes a plurality of transfer systems 1 each of which is the transfer system shown in Figs. 1 to 3.

In the case where the guard is provided around the picking device which carries out the automatic transferring work in the transfer system in the above-described manner, an installation space for the transfer system will be enlarged. This will increase an interval between adjacent ones of the transfer systems.

On the other hand, in the present embodiment, the plurality of transfer systems 1 are arranged side by side along the X direction such that the transporting parts 11 of the transfer systems 1 are substantially in parallel with each other. With this, the transferring part 12 and an outside area in the Y direction are separated from each other by the side guard parts 21 of the support parts 14a and 14a provided so as to be adjacent to the transferring part 12. This can prevent or reduce increase in interval between adjacent ones of the transfer systems 1.

Incidentally, a building 51 such as a distribution warehouse includes support column members 52 supporting an upper floor or a ceiling, the support column members 52 being arranged at predetermined intervals P in a protruding manner. Thus, from the viewpoint of enhancement in efficiency of transferring of an article 2, the number of transfer systems which can be installed within the predetermined interval P is desirably large.

However, providing the guard around the picking device will enlarge the installation space for the transfer system. As a result, there is a possibility that the number of transfer systems which can be installed within the predetermined interval P may decrease.

On the other hand, in the present embodiment, the plurality of transfer systems 11 are arranged side by side along an X direction, where the X direction is a direction along which the support column members 52 and 52 adjacent to each other are arranged. Consequently, it is possible to prevent or reduce increase in the interval between the transfer systems 1 which are adjacent to each other in the X direction. Therefore, it is possible to prevent or reduce decrease of the number of transfer systems 1 which can be installed within the predetermined interval P.

### [Notes]

In the foregoing embodiments, the first container 17 and the second container 18 each housing an article 2 therein are transported by the transporting part 11. However, this is not limitative. For example, the first container 17 and the second container 18 may be omitted. Alternatively, the article 2 itself may be transported by the transporting part 11.

Aspects of the present invention can also be expressed as follows:
As discussed above, a transfer system in accordance with a first aspect of the present invention includes: a transporting part which transports an article in a first direction; a transferring part which is provided on one end side of the transporting part and which holds and transfers the article; a camera part which is disposed above the transferring part and which captures an image of the article; and two support parts which support the camera part, the two support parts being provided, for the transferring part, at respective locations in a second direction orthogonal to the first direction in a plan view, and the two support parts separating the transferring part and an outside area in the second direction from each other.

With the above configuration, it is possible to prevent a situation in which a person or a part of the person enters the inside from the outside and comes into contact with the transferring part. As a result, it is possible to enhance safety of the transfer system. Further, it is not necessary to additionally provide a partition part for separating the transferring part and the outside area in the second direction from each other. As a result, it is possible to save the space of the transfer system.

A transfer system in accordance with a second aspect of the present invention may be configured such that, in the first aspect, the transfer system further includes: a terminal-end-side partition part which separates (i) an outside area opposite to the transporting part across the transferring part in a plan view and (ii) the transferring part from each other, the terminal-end-side partition part being connected to the two support parts. In this case, it is possible to prevent a situation in which a person or a part of the person enters the inside from the outside and comes into contact with the transferring part. As a result, it is possible to enhance safety of the transfer system.

A transfer system in accordance with a third aspect of the present invention may be configured such that, in the second aspect, a work area is positioned between the transferring part and the terminal-end-side partition part, the work area being an area where a worker holds and transfers the article. In this case, it is possible to prevent a situation in which a person accidentally enters the work area and comes into contact with the transferring part. As a result, it is possible to enhance safety of the transfer system.

A transfer system in accordance with a fourth aspect of the present invention may be configured such that, in any one of the first to third aspects, the transfer system further includes: two transfer-side partition parts which are disposed so as to be adjacent to the one end of the transporting part in a second direction orthogonal to the first direction in a plan view, the two transfer-side partition parts separating the one end and an outside area in the second direction from each other, and the two transfer-side partition parts being respectively connected to the two support parts. In this case, it is possible to prevent a situation in which a person or a part of the person enters the inside from the transporting part and comes into contact with the transferring part. As a result, it is possible to enhance safety of the transfer system.

A transfer system in accordance with a fifth aspect of the present invention may be configured such that, in any one of the first to fourth aspects, the transporting part includes a moving mechanism which moves a plurality of containers one by one in order, each of the plurality of containers being configured to house an article therein, and a housing in which the moving mechanism is housed and which is adjacent to the two support parts; and in areas of the two support parts which areas face the housing, a partition for separating the transferring part and the outside area in the second direction from each other is not provided. In this case, it is possible to reduce an area where the partition is provided. Note that, in an area where the partition is not provided, the housing serves as a partition between the transferring part and the outside area in the X direction.

A transfer system in accordance with a sixth aspect of the present invention may be configured such that, in any one of the first to fifth aspects, the transferring part includes a picking head which holds the article, and a driving part which raises and lowers the picking head and moves the picking head in the first direction and the second direction in a plan view, on a basis of the captured image from the camera part.

A transfer facility in accordance with a seventh aspect of the present invention is a transfer facility including: a plurality of transfer systems each of which is identical to the transfer system in accordance with any one of the first to sixth aspects, the plurality of transfer systems being arranged side by side along a second direction which is orthogonal to the first direction in a plan view so that the transporting parts of the plurality of transfer systems are substantially in parallel with each other.

With the above configuration, the transferring part and the outside area in the second direction are separated from each other by the support part. This can prevent or reduce increase in interval between adjacent ones of the transfer systems.

A transfer facility in accordance with an eighth aspect of the present invention may be configured such that, in the seventh aspect, the transfer facility further includes: a plurality of support column members arranged at predetermined intervals in a protruding manner, the plurality of transfer systems being arranged side by side in the second direction, where the second direction is a direction along which adjacent ones of the plurality of support column members are arranged. In this case, it is possible to prevent or reduce increase in the interval between the transfer systems which are adjacent to each other in the second direction. Therefore, it is possible to prevent or reduce decrease of the number of transfer systems which can be installed within the predetermined interval.

The present invention is not limited to the embodiments, but can be altered by a skilled person in the art within the scope of the claims. The present invention also encompasses, in its technical scope, any embodiment derived by combining technical means disclosed in differing embodiments.

### Reference Signs List

1: transfer system
2: article
3: transfer facility
11: transporting part
11a, 11b: carry-in conveyor
11c, 11d: carry-out conveyor
11e: moving mechanism
11f: housing
12: transferring part
12a: picking head
12b: driving part
12c: fixed rail
12d: first movable rail
12e: second movable rail
12f: support arm
13: camera part
13a: first camera
13b: second camera
13c, 13d: light
13e: reflective plate
14: support frame
14a: support part
14b: beam member
14c, 14d: column member
14e: girder member
14f: reinforcement member
14g, 14h, 26a, 33a, 43a: fixing member
14i: support member
15: control part
16: terminal part
17: first container
18: second container
21: side guard part
22, 31, 35, 42: transparent plate
23, 32, 36, 43: frame member
24: front guard part (terminal-end-side partition part)
25: work area
26: fixed-type guard part
27: movable-type guard part
33: frame member for fixing
34: movable member
41: rear guard part (transfer-side partition part)
44, 45: reinforcement member
51: building
52: support column member

## Claims

1. A transfer system comprising:
a transporting part which transports an article in a first direction;
a transferring part which is provided on one end side of the transporting part and which holds and transfers the article;
a camera part which is disposed above the transferring part and which captures an image of the article; and
two support parts which support the camera part, the two support parts being provided, for the transferring part, at respective locations in a second direction orthogonal to the first direction in a plan view, and the two support parts separating the transferring part and an outside area in the second direction from each other.

2. The transfer system according to claim 1, further comprising:
a terminal-end-side partition part which separates (i) an outside area opposite to the transporting part across the transferring part in a plan view and (ii) the transferring part from each other, the terminal-end-side partition part being connected to the two support parts.

3. The transfer system according to claim 2, wherein:
a work area is positioned between the transferring part and the terminal-end-side partition part, the work area being an area where a worker holds and transfers the article.

4. The transfer system according to claim 1, further comprising
two transfer-side partition parts which are disposed so as to be adjacent to the one end of the transporting part in a second direction orthogonal to the first direction in a plan view, the two transfer-side partition parts separating the one end and an outside area in the second direction from each other, and the two transfer-side partition parts being respectively connected to the two support parts.

5. The transfer system according to claim 1, wherein:
the transporting part includes
a moving mechanism which moves a plurality of containers one by one in order, each of the plurality of containers being configured to house an article therein, and
a housing in which the moving mechanism is housed and which is adjacent to the two support parts; and
in areas of the two support parts which areas face the housing, a partition for separating the transferring part and the outside area in the second direction from each other is not provided.

6. The transfer system according to any one of claims 1 to 5, wherein:
the transferring part includes
a picking head which holds the article, and
a driving part which raises and lowers the picking head and moves the picking head in the first direction and the second direction in a plan view, on a basis of the captured image from the camera part.

7. A transfer facility comprising:
a plurality of transfer systems each of which is identical to a transfer system recited in any one of claims 1 to 5,
the plurality of transfer systems being arranged side by side along a second direction which is orthogonal to the first direction in a plan view so that the transporting parts of the plurality of transfer systems are substantially in parallel with each other.

8. The transfer facility according to claim 7, further comprising:
a plurality of support column members arranged at predetermined intervals in a protruding manner,
the plurality of transfer systems being arranged side by side in the second direction, where the second direction is a direction along which adjacent ones of the plurality of support column members are arranged.
